# EUROPEAN PATENT SPECIFICATION

(11) **EP 2 919 956 B1**
(45) Date of publication and mention of the grant of the patent: **01.03.2017**
(21) Application number: 13828885.7
(22) Date of filing: 15.11.2013
(51) Int. Cl.: B29B 17/02, C04B 30/02, C04B 14/06

(54) **PROCESS FOR RECOVERING WASTE FROM THE PRODUCTION AND/OR PROCESSING OF THERMAL INSULATING MATERIALS**
VERFAHREN ZUR RÜCKGEWINNUNG VON ABFÄLLEN AUS DER PRODUKTION UND/ODER BEARBEITUNG VON WÄRMEISOLIERENDEN MATERIALIEN
PROCÉDÉ POUR RÉCUPÉRER DES DÉCHETS À PARTIR DE LA PRODUCTION ET/OU DU TRAITEMENT DE MATÉRIAUX THERMIQUEMENT ISOLANTS

(30) Priority: 16.11.2012 IT MI20121955
(43) Date of publication of application: 23.09.2015
(73) Proprietor: 29 Investimenti S.r.l., 24121 Bergamo (IT)
(72) Inventor: MANENTI, Giacomo, I-20056 Trezzo sull'Adda (Milan) (IT); VITALI, Giuseppe, I-24055 Cologno al Serio (Bergamo) (IT); SALA, Alessandro, Giovanni, I-24040 Bonate Sopra (Bergamo) (IT); SPINELLI, Paolo, I-20125 Milan (IT)
(74) Representative: Carloni, Franco
(86) International application number: PCT/IT2013/000321
(87) International publication number: WO 2014/076729

(56) References cited:
- WO-A1-94/20274
- US-A1- 2012 187 323
- N.N.: "Frequently Asked Questions", AIrtight Distribution , 26 September 2008 (2008-09-26), pages 1-1, XP002700002, Retrieved from the Internet: URL:http://www.airtightdistribution.com/fa q.html [retrieved on 2013-07-02]

## Description

### Technical field of the invention

The present invention generally relates to the technical field of recovery of industrial waste and, in particular, it concerns a novel process enabling the scraps resulting from the production and processing of thermal insulating articles to be recovered in a simple and effective way, so that they can be reused as secondary raw material or as additives or fillers, for manufacturing new products.

### State of the art

The production and processing of thermal insulating articles inevitably produces a large amount of scrap material which is currently considered industrial waste, since it has no other practical use, and is eliminated with high disposal costs. This problem occurs, with particular evidence, in the production and processing of thermal insulating articles that contain an aerogel material, e.g. silica, carbon or alumina aerogel.

It is known that in thermal insulating articles of the aforesaid type, the aerogel material is joined to a support layer made of synthetic fibres and/or inorganic materials, which ensures flexibility and resistance. During the phases of production and processing of these articles, scraps of fibres and aerogel are produced which require special procedures for their collection and disposal. The recovery of this scrap material would not only reduce disposal costs, but it would also make available raw material for the production of new thermal insulating articles which, otherwise, would be expensive to produce and obtain. A method for recovering this kind of scrap material is known, for example, from WO94/20274.

The primary purpose of the present invention, therefore, consists in recovering scraps of reinforcement fibres and aerogel material used in thermal insulating articles of the type mentioned above, in order to reuse these as secondary raw material or as additives or fillers, in the manufacture of new finished or semi-finished thermal insulating articles.

### Summary of the invention

The object addressed by the present invention is achieved with a process for the recovery of waste materials composed of waste, of various shapes and sizes, formed of synthetic and/or inorganic fibres containing particles of aerogel material, characterised in that it comprises:
- a first phase of fragmentation of the waste materials, in order to reduce said waste materials into an incoherent mass of fibres containing particles of aerogel material,
- a second phase of separation of the particles of aerogel material and classification of the fibres, in order to separate the particles of aerogel material from the fibres and to classify the fibres according to their length, and
- a third phase of classification of the particles of aerogel material, in order to classify the particles of aerogel material according to a characteristic length thereof.

### Brief Description of Drawings

The invention will now be described in more detail with reference to a preferred embodiment thereof, illustrated by way of example only, and not of limitation, in the accompanying drawings, wherein:
Figure 1 schematically illustrates the first and the second phase of the process according to the invention,
Figure 2 schematically illustrates the third phase of the process of the invention, and
Figure 3 diagrammatically illustrates the ways in which the materials recovered by the process of the invention can be combined with each other to obtain new products.

### Preferred embodiment of the invention.

As mentioned previously with regard to the technical field in which the present invention is applied, the process described herein is aimed primarily at the recovery of waste material resulting from the production and processing of thermal insulating articles containing aerogel material. It should be noted, however, that the process can be applied, without modification, also to the recovery of the waste materials that are obtained from dismantling and demolishing aerogel-based thermal insulating articles installed in buildings or in civil and industrial installations, or in parts thereof.

Indeed, the waste material that is treated with the process is substantially the same in both the abovementioned applications, namely it is typically made from scraps, residues or fragments, having various shapes and sizes, which are formed of synthetic and/or inorganic fibres containing particles of aerogel material. More particularly, the composition of these waste materials can include, e.g., polymer and/or copolymer fibres, glass, carbon and/or rock wool fibres and particles of metal and/or metalloid oxides.

The process of the invention for recovering this type of waste material is divided essentially into three phases, defined and characterised as follows.

### Phase I

### Fragmentation of the waste material.

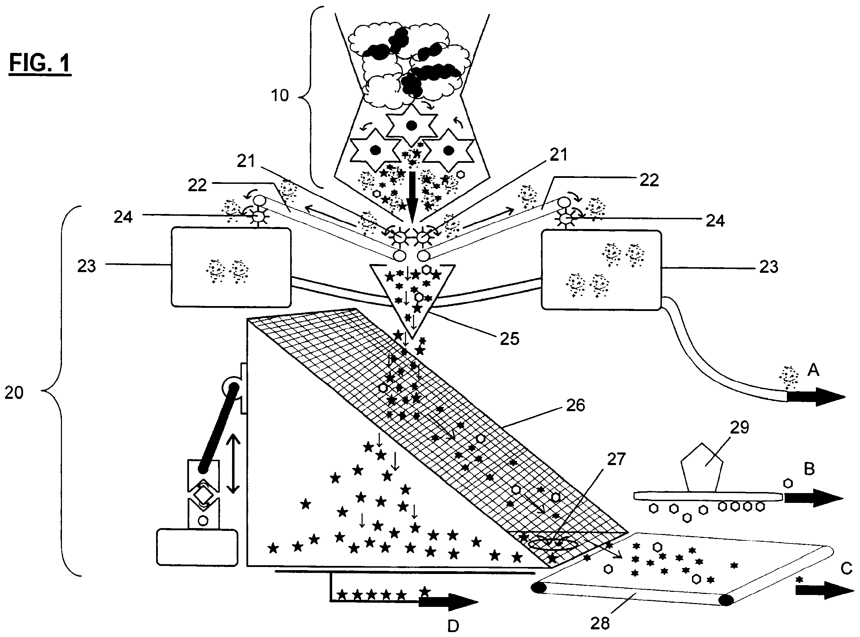

In the fragmentation phase, which is illustrated in Figure 1 of the drawings, the waste material, following a possible preliminary sorting performed manually or with the aid of means of type known in the art, is reduced into an incoherent mass of fibres of varying lengths, more or less tangled one another, which contain particles of aerogel material.

The length of the fibres may vary, generally, from 3 to 50 mm, while the characteristic length of the aerogel particles is typically comprised between 1 and 150 µm, for the smaller particles, and more than 150 µm for the larger particles.

The fragmentation of the waste material may be carried out with shredders, triturators, comminuters, or similar apparatuses, of the type known in the art, which use, e.g., shafts, rollers or rotating disks to reduce the waste material into fragments. Figure 1 of the drawings schematically illustrates an exemplary embodiment of such an apparatus, indicated as a whole with the numeral 10. Since these apparatuses are generally known to a person skilled in the art, it is not deemed necessary to describe their form of construction in more detail, it being understood that the form may vary from that shown here, according to the technological development in the field of such equipment.

### Phase II

### Separation of particles with aerogel material and classification of the fibres.

The fragmentation phase is followed by a separation and classification phase, the purpose of which is to separate the particles of aerogel material from the fibres and to classify the fibres according to their characteristic length.

This phase can be done by means of mechanical or electrostatic devices of the kind known in the art, or by a combination thereof in a defined operating sequence. A preferred embodiment of these devices is indicated as a whole with the numeral 20 in Figure 1 of the drawings.

From Figure 1 of the drawings it can seen that, first, the long fibres are separated from the product obtained from the fragmentation phase, by means of a pair of counter-rotating roller brushes 21 arranged at the output of the fragmenting apparatus 10. These brushes 21 capture the long fibres and direct them toward belt conveyors 22, which are formed by a strip of mat provided with hooking means, such as spikes, teeth or hooks, arranged on its outer surface, which are intended to engage and to remove long fibres from the brushes 21. In alternative to the hooking means described above, adhesive means or suction means may be used to detach the long fibres from the brushes 21. The long fibres that are thus hooked to the strip of mat are then transported to a receptacle 23 used for collecting the fibres, where a suitable brush roller 24 removes the fibres from the strip of mat and feeds them to the aforesaid receptacle 23. The fibres thus obtained form a first portion of fibres, denoted by **A,** whose length is approximately greater than 30 mm. These fibres, which still contain particles of aerogel material, can be reused as such, as secondary raw material, to produce thermal insulating articles, or they may be subjected to a subsequent electrostatic separation, in order to separate the fibres from the particles of aerogel material, thus obtaining, in addition to the fibres, also a fraction of a powder of aerogel material which is reusable as secondary raw material. In an alternative embodiment, the electrostatic separation might also precede a mechanical separation, in order to separate also a portion of short fibres and medium having a fibre length of less than approximately 30 mm. However, this and other possible alternative embodiments which employ a different sequence of mechanical and electrostatic separation operations will not be described further here, it being evident that they consist in variants within the reach of a person skilled in the art.

With reference again to the embodiment in Figure 1 of the drawings, it can be noted that the material that is not captured by the counter-rotating roller brushes, and which consists essentially of short and medium length fibres containing particles of aerogel material, is fed by gravity to a hopper 25 located beneath the brushes 21. The hopper 25 may be fitted with a vibrating device to facilitate the flow of the material and may be of the dry type or of the type operating with addition of water. The use of a hopper of the type operating with water may be convenient to separate a portion of the particles of aerogel material from the fibres. Since the particles of aerogel material are hydrophobic and have a lower density than water, they cannot solubilise and they float on the water surface, so that they can be easily picked up, e.g., by means of a suitable skimmer or aspirator.

The output product from the hopper falls upon an inclined oscillating sieve 26 which retains the short and medium length fibres and allows the particles of aerogel material to pass through. The particles of aerogel material that pass through the sieve are collected on a tray at the bottom of the sieve 26, and from here they are sucked through an opening 27 and conveyed to a treatment device that will be described later. The short and medium length fibres, which are retained by the sieve, are instead directed to a conveyor belt 28 that feeds them to an electrostatic separator 29, where the short and medium length fibres are separated from the residual particles of aerogel material. The short and medium length fibres separated in this way form a second portion of fibres having a length less than about 30 mm. Also this second portion of synthetic fibres, which is denoted by **B** in Figure 1, forms a secondary raw material which can have further applications in the manufacture of thermal insulating articles.

The particles of aerogel material obtained from the mechanical and electrostatic separation, denoted in Figure 1 by **C** and **D,** respectively, are subjected to a classification phase described below.

### Phase III

### Classification of particles of aerogel material.

The process of the invention, in the final phase, carries out a classification of the particles of aerogel material according to the value of their characteristic length. The classification phase of the particles of aerogel material is different for the fraction of particles obtained by electrostatic separation (fraction **C**) and that obtained from mechanical separation (fraction **D**).

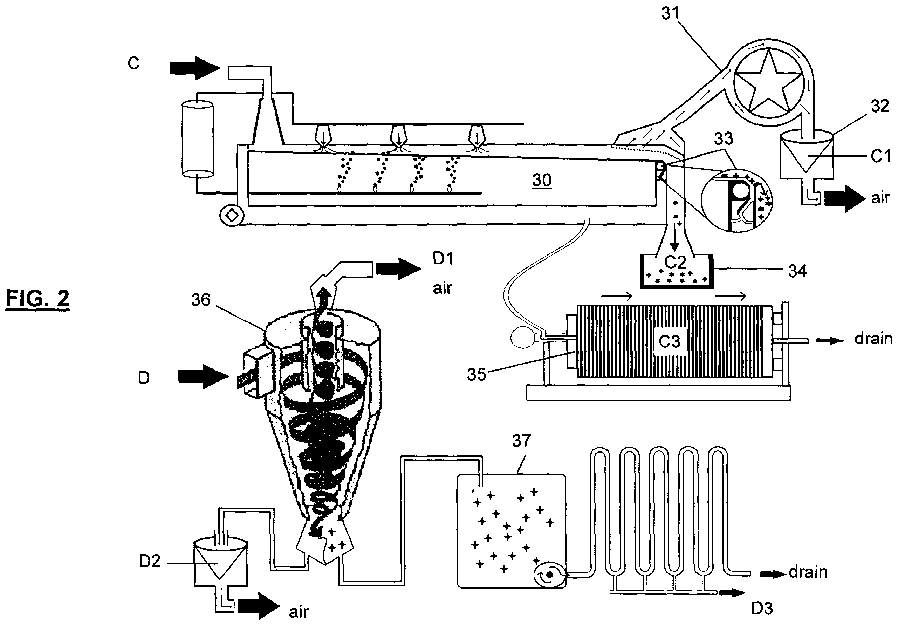

As it can be seen in Figure 2 of the drawings, the classification phase for the fraction **C** of the particles of aerogel material obtained by electrostatic separation is introduced inside a tank 30 containing tap water or water together with appropriate chemicals, e.g. floating agents, in order to improve the flotation of particles of aerogel material. Advantageously, the water in the tank 30 can be maintained in agitation by stirring means or by means of ultrasounds, air insufflations, or by any other suitable means which allows an easier migration of the particles of aerogel material towards the water surface. At the end of the tank 30 opposite to where the particles of aerogel material are introduced there is an aspirator 31 which sucks a portion of the particles of aerogel material floating on the water surface. The aspirated particles of aerogel material are captured by a filter 32 placed in the exhaust duct of the aspirator. This portion of particles of aerogel material, denoted by **C1,** which is retained in the filter, forms a powder of aerogel material which is usable as a secondary raw material to produce thermal insulating articles. The particles of aerogel material forming the fraction **C1** have a characteristic length comprised approximately between 100 and 150 µm.

The remaining portion of particles of aerogel material, that is not sucked and remains floating on the water surface, is transported with the water towards a baffle 33 where a scraper, such as a blade, a plate or another device, is arranged to remove the particles of aerogel material from the water surface while they are being transported by the downward flowing water current. The particles of aerogel material that are thus collected by the scraper fall by gravity into a receptacle 34 and form a powder of aerogel material, denoted by **C2,** which is equally usable as secondary raw material for producing thermal insulating articles. The particles of aerogel material forming the fraction **C2** have a characteristic length comprised approximately between 50 and 100 µm.

The water that passes over the baffle and flows downward can be returned into the tank 30 by means of suitable recirculator pumps or it can be drained. In the latter case, before being discharged through the drainage system, the water can be passed through a filter press 35, in order to separate any residual part of particles of aerogel material, which is denoted by **C3.** The particles of aerogel material forming the fraction **C3** have a characteristic length comprised between approximately 1 and 50 µm.

As can be seen in Figure 2 of the drawings, the process of the invention involves that the fraction **D** of particles of aerogel material obtained from the mechanical separation, which lies on the tray on the bottom of the sieve 26, is sucked and conveyed to a cyclone separator 36. The cyclone separates from the air stream the particles of aerogel material with characteristic length greater than 100 µm, which are thus collected on the bottom of the unit and form the fraction denoted by **D2.** The particles of aerogel material with a characteristic length equal to or less than 100 µm are conveyed with the current of air through the exhaust duct at the top of the unit and form the fraction denoted by **D1.**

The cyclone separator 36 may be of the dry type or wet type. In the case of a wet type cyclone separator, the process liquid containing the particles of aerogel material with characteristic length between 1 and 50 µm undergoes a purification treatment in a purifier 37, in order to separate the particles of aerogel material from the liquid, before it is sent to the discharge system. The fraction of particles of aerogel material separated in the purifier 37 is denoted by **D3** in Figure 2 of the drawings.

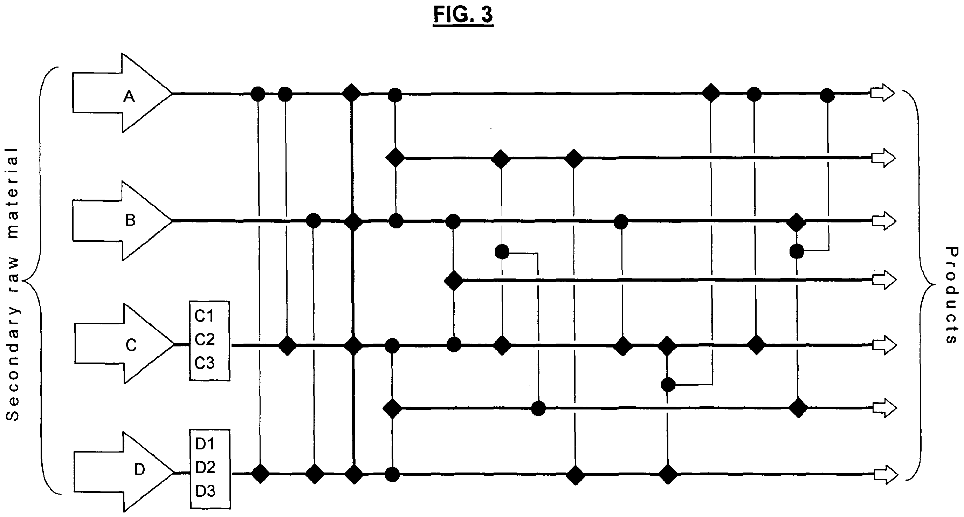

In the diagram of Figure 3 of the drawings there is schematically illustrated the manner in which the various materials recovered through the process of the invention (fibres **A** and **B,** and particles of aerogel material **C1, C2, C3** and **D1, D2, D3**) can be combined one another, in order to obtain secondary raw material used to produce new aerogel-based thermal insulating articles. In Figure 3 we can see, e.g., that the fibres A may be combined with one of the fractions **D1, D2** or **D3** of particles of aerogel material, and subsequently fibres **B** can be added thereto, together with one of the fractions **C1, C2** or **C3** of particles of aerogel material. As one can easily understand, since there are many combinations that can be made starting from the recovered materials, the secondary raw material that results will have different characteristics which can be chosen based on the final objectives of the thermal insulating article that is to be produced.

From the foregoing, it can be understood that the invention achieves the intended purpose of allowing the recovery of scraps of reinforcing fibres and of aerogel material used in aerogel-based thermal insulating articles, in order to reuse them as secondary raw material for producing new finished or semi-finished thermo insulating products. Although the invention has been described and illustrated with reference to a preferred embodiment, it is clear that a person skilled in the art may make various modifications and additions thereto, without departing from the scope of the appended claims.

## Claims

1. A process for the recovery of waste materials composed of waste, of various shapes and sizes, formed of synthetic and/or inorganic fibres containing particles of aerogel material, comprising:
- a first phase of fragmentation of the waste materials, in order to reduce said waste materials into an incoherent mass of fibres containing particles of aerogel material, **characterised in that** it further comprises:
- a second phase of separation of the particles of aerogel material and classification of the fibres, in order to separate the particles of aerogel material from the fibres and to classify the fibres according to their length, and
- a third phase of classification of the particles of aerogel material, in order to classify the particles of aerogel material according to a characteristic length thereof.

2. Process according to claim 1, **characterised in that** the phase of fragmentation of the waste materials is carried out by means of fragmenting devices (10) comprising shafts, rollers or rotating disks adapted to reduce the waste materials into fragments.

3. Process according to claim 1, **characterised in that** the phase of separation of the particles of aerogel material and of classification of the fibres is performed by mechanical or electrostatic separation devices (20), or a combination thereof in a defined sequence.

4. Process according to claim 1, **characterised in that** the step of classification of the particles of aerogel material is carried out by flotation in a liquid medium and subsequent separation from said liquid medium by means of scraper devices (33) and/or suction devices (31).

5. Process according to claim 4, **characterised in that** said liquid medium is pure water or water containing flotation agents.

6. Process according to claim 1, **characterised in that** the classification of the particles of aerogel material is carried out by centrifugal action.

7. Process according to claim 6, **characterized in that** the centrifugal action is produced by means of a cyclone separator (36).

## Patentansprüche

1. Verfahren zur Rückgewinnung von Abfallmaterialien, zusammengesetzt aus Abfall verschiedener Formen und Größen, der aus synthetischen und/oder anorganischen Fasern gebildet ist, die Partikel eines Aerogel-Materials enthaltem, aufweisend:
- eine erste Phase einer Fragmentierung der Abfallmaterialien, um die Abfallmaterialien in eine inkohärente Masse an Fasern zu reduzieren, die Partikel eines Aerogel-Materials enthalten, **dadurch gekennzeichnet, dass** es ferner aufweist:
- eine zweite Phase einer Separierung der Partikel an Aerogel-Material und Klassifikation der Fasern, um die Partikel an Aerogel-Material von den Fasern zu separieren und die Fasern gemäß ihrer Länge zu klassifizieren, und
- eine dritte Phase einer Klassifikation der Partikel an Aerogel-Material, um die Partikel an Aerogel-Material gemäß deren charakteristischer Länge zu klassifizieren.

2. Verfahren nach Anspruch 1, **dadurch gekennzeichnet, dass** die Phase einer Fragmentierung der Abfallmaterialien mittels Fragmentiereinrichtungen (10) ausgeführt wird, die Wellen, Walzen oder rotierende Scheiben aufweisen, die geeignet sind, um die Abfallmaterialien in Fragmente zu reduzieren.

3. Verfahren nach Anspruch 1, **dadurch gekennzeichnet, dass** die Phase einer Separierung der Partikel an Aerogel-Material und einer Klassifikation der Fasern durch mechanische oder elektrostatische Separiereinrichtungen (20) oder eine Kombination davon in einer definierten Sequenz durchgeführt wird.

4. Verfahren nach Anspruch 1, **dadurch gekennzeichnet, dass** der Schritt einer Klassifikation der Partikel an Aerogel-Material durch Flotation in einem flüssigen Medium und nachfolgende Separation vom flüssigen Medium mittels Abstreifvorrichtungen (33) und/oder Absaugvorrichtungen (31) ausgeführt wird.

5. Verfahren nach Anspruch 4, **dadurch gekennzeichnet, dass** das flüssige Medium reines Wasser oder ein Wasser ist, das Flotationsagenzien beinhaltet.

6. Verfahren nach Anspruch 1, **dadurch gekennzeichnet, dass** die Klassifikation der Partikel an Aerogel-Material durch eine zentrifugale Aktion ausgeführt wird.

7. Verfahren nach Anspruch 6, **dadurch gekennzeichnet, dass** die zentrifugale Aktion mittels eines Zyklonseparators (36) erzeugt wird.

## Revendications

1. Procédé de récupération de matières de déchets composées de déchets de formes et dimensions diverses, formées de fibres synthétiques et/ou minérales contenant des particules d'une matière aérogel, comprenant:
- une première phase de fragmentation des matières de déchets afin de réduire les matières de déchets en une masse incohérente de fibres contenant des particules d'une matière d'aérogel, **caractérisé en ce qu'**il comprend, en outre:
- une deuxième phase de séparation d'une matière aérogel et de classification des fibres afin de séparer les particules d'une matière aérogel des fibres et de classer les fibres suivant leur longueur et
- une troisième phase de classification des particules d'une matière aérogel afin de classer les particules d'une matière aérogel suivant leur caractéristique de longueur.

2. Procédé suivant la revendication 1, **caractérisé en ce que** l'on effectue la phase de fragmentation des matières de déchets au moyen de dispositifs (10) de fragmentation, comprenant des arbres, des rouleaux ou des disques tournants, propres à réduire les matières de déchets en fragments.

3. Procédé suivant la revendication 1, **caractérisé en ce que** l'on effectue la phase de séparation des particules d'une matière aérogel et de classification des fibres, par des dispositifs (20) de séparation mécaniques ou électrostatiques, ou par une combinaison d'entre eux suivant une séquence définie.

4. Procédé suivant la revendication 1, **caractérisé en ce que** l'on effectue le stade de classification des particules d'une matière d'aérogel par flottation dans un milieu liquide et séparation ensuite du milieu liquide, au moyen de dispositifs (33) à racleur et/ou de dispositifs (31) d'aspiration.

5. Procédé suivant la revendication 4, **caractérisé en ce que** le milieu liquide est de l'eau pure ou de l'eau contenant des agents de flottation.

6. Procédé suivant la revendication 1, **caractérisé en ce que** l'on effectue la classification des particules d'une matière d'aérogel par un effet de centrifugation.

7. Procédé suivant la revendication 6, **caractérisé en ce que** l'on produit l'effet de centrifugation au moyen d'un séparateur (36) cyclone.
